# EUROPEAN PATENT APPLICATION

(11) **EP 1 494 448 A1**
(43) Date of publication of application: **05.01.2005**
(21) Application number: 03101957.3
(22) Date of filing: 01.07.2003
(51) Int. Cl.: H04N 1/028, G01T 1/29

(54) **Flying spot scanner**

(71) Applicant: AGFA-GEVAERT, 2640 Mortsel (BE)
(72) Inventor: Struye, Luc c/o AGFA-GEVAERT Corporate, 2640, Mortsel (BE); Leblans, Paul c/o AGFA-GEVAERT, 2640, Mortsel (BE)

(57) **Abstract**

To avoid non-uniform sensitivity of a flying spot scanner, light distributing means are provided in between light guiding means and a detector for distributing light leaving the light guiding means over the whole entrance surface of the detector.

## Description

### FIELD OF THE INVENTION

The present invention relates to light detection in flying spot scanners, more specifically flying spot scanners used in medical applications.

### BACKGROUND OF THE INVENTION

In the field of computed radiography a radiation image can be stored in a photo-stimulable phosphor screen.

A digital signal representation of the stored radiation image is obtained by scanning the screen with stimulating radiation and detecting the image-wise modulated light emitted by the screen upon stimulation.

Commonly the radiation image is read out of the screen in a flying spot scanner. In a flying spot scanner a recording member such as a photo-stimulable phosphor screen is scanned by deflecting radiation emitted by a source of radiation in a first direction, the so-called fast scan direction and by transporting the image into a second direction, e.g. perpendicular to the first direction, said second direction being referred to as the slow scan direction.

Image-wise modulated light emitted by the screen upon stimulation is then guided by light guiding means, e.g. a bundle of optical fibers, towards the light sensitive entrance surface of a photo-electrical converter such as a photo-multiplier by means of which the detected light is converted in to an electric signal.

In this concept, the light emitted by pixels within a single line on the phosphor screen is guided by a bundle of optical fibers towards a circular entrance surface of the photo-multiplier.

The number of optical fibers that transport the light emitted by a single pixel towards the anode of the photo-multiplier is limited and the light of one pixel is guided to a dedicated part of the surface of the anode. Light emitted by another pixel is guided to another part of the surface.

The spectral sensitivity of the anode surface and an optical filter used to avoid stimulating light entering the photo-multiplier may be not completely uniform. This non-uniform spectral sensitivity has a negative influence on the detected signal specially when different phosphors with different emission spectra are used. Calibration becomes more difficult if the plate used to calibrate contains another phosphor as the plate used to make the images. This effect depends on the way in which the light guiding optical fibers are bundled.

Calibration of this non-sensitive behavior is difficult since the calibration corresponds with the position of the recording member and may hence not be applicable in all circumstances. Calibration might for example become in-applicable when the calibration line is showing parts with high gradients and if the position of the screen in the flying spot scanner is slightly changed, for example slightly displaced.

Moreover, the calibration depends on the emission wavelength of the phosphor and a scanner should thus be calibrated for each material having its own emission wavelength.

### SUMMARY OF THE INVENTION

To overcome the above described problems, an apparatus is provided for reading an image that has been stored in a recording member as set out in claim 1.

Particular embodiments are set out in the dependent claims.

The apparatus has light distributing means in between the output of light guiding means guiding image-wise modulated light towards a detector and the detector so that light leaving the light guiding means is distributed over substantially the whole entrance surface of the detector.

Different embodiments may be envisaged.

In one embodiment a diffuser such as an opaline glass is provided in between the output of the light guiding means and the entrance surface of the detector.

In another embodiment a hollow tube is provided between the light guiding means and the entrance surface of the detector. The output of all individual fibers has to enter the tube. The output of the tube needs to cover at least the entrance window of the photo-multiplier. The tube provides that the distance between the light guide and entrance of the photo-multiplier is increased while the light remains to be guided into the detector. Optimally the inner surface of the tube is covered with a material that has very good light reflecting properties such as white paint (e.g. Eastman Kodak White Paint (BaSO₄)) or high-gloss aluminum.

In another embodiment an integrating sphere is provided in between the light guiding means and the entrance surface of the detector. The integrating sphere is a hollow sphere having an entrance window, which is positioned so that the output of the light guiding means is coupled to the entrance window of the integrating sphere while the output window of the integrating sphere is coupled to the entrance window of the detector.

The inner surface of the sphere is preferably provided with a material that has very good reflecting properties, white lacquer (BaSO₄) or high-gloss aluminum.

The invention has been conceived for a particular application in which a radiation image, more particular an X-ray image of a patient is temporarily stored in a photo-stimulable phosphor screen and wherein the image is read out of the screen by line-wise scanning the screen with laser light having (a) wavelength range(s) in the stimulating wavelength range of the phosphor. Image-wise radiation emitted by the screen upon stimulation is guided by a light guiding means, more particular by a bundle of optical fibers towards the anode of a photo-multiplier tube and converted into an electrical signal representation. The bundle of optical fibers is arranged to form a line parallel with a scanned line (fast scan direction) at its light input side and is arranged to form a circular area at the output side.

The invention is however not limited to this particular application.

### BRIEF DESCRIPTION OF THE DRAWINGS

Fig. 1 schematically illustrates a flying spot scanner according to the present invention,
Fig. 2 - 5 illustrate the effect of a light distributing means in between the output of light guiding means and entrance surface of the detector.

### DETAILED DESCRIPTION OF THE INVENTION

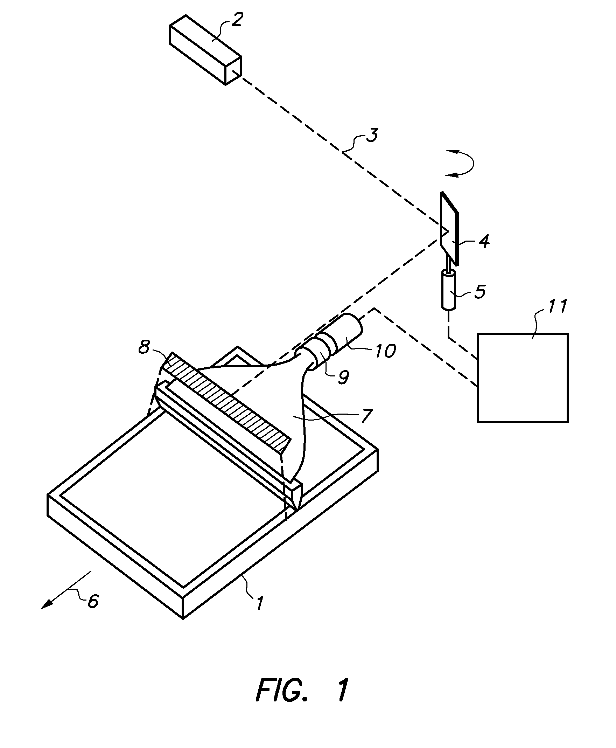

Figure 1 shows a specific embodiment of a read out apparatus according to the present invention which is adapted for read out of a radiation image such as an X-ray image that has been stored in a photo-stimulable phosphor screen.

A stimulable phosphor screen has been exposed to radiation such as an X-ray image of a patient is read out in a read out apparatus such as the one shown in figure 1.

The apparatus comprises the following components: a stimulating light source 2 such as a laser.

A galvanometric mirror, driven by drive means 5 is controlled and arranged to deflect the light emitted by the light source in the fast scan direction.

Transport means (not shown) are provided to transport the screen in the direction of arrow 6 to enable the whole screen to be scanned in two dimensions.

Positioned close to but behind the scanning line of the laser beam on the phosphor sheet 1 is a light guide 7 which receives image-wise modulated light emitted from the phosphor sheet but is shielded by shielding means 8 from direct exposure to the laser beam 3. The light guide comprises individual optical fibers that are bundled at the output end. The output end is positioned close to the entrance of a light distributing means 9 according to the present invention. The light distributing means consists of a hollow tube of approximately 15-cm and a inner diameter of 8 cm. The inner surface of the tube is covered with high-gloss aluminum.

The output end of the tube is positioned adjacent to the entrance window of a photo multiplier 10 which produces an electrical signal representative of the light intensity falling on its entrance window. An optical filter (not shown) was placed at the output window of the tube in front of the photomultiplier.

Light originating from a single pixel in the image is transported by at least one of the optical fibers to entrance of the tube and is then further guided by the tube onto the entrance window of the photo-multiplier where the light falling on the entire surface will be integrated and will constitute the input of the light to signal conversion for the generation of the signal presentation of that specific pixel.

The signal generated by the photo multiplier may be processed in processing means 11, stored, transmitted or applied to another device such as a display monitor.

### Comparative example:

Two phosphor screens of the same type were identically subjected to a flat field (overall uniform) irradiation.

The alignment of the phosphor screens in the cassettes conveying the screens was different during either of the exposures. One screen was aligned with the right side of the cassette while the other screen was aligned with the left side.

Both screens were read out in an identical way in the same flying spot scanner.

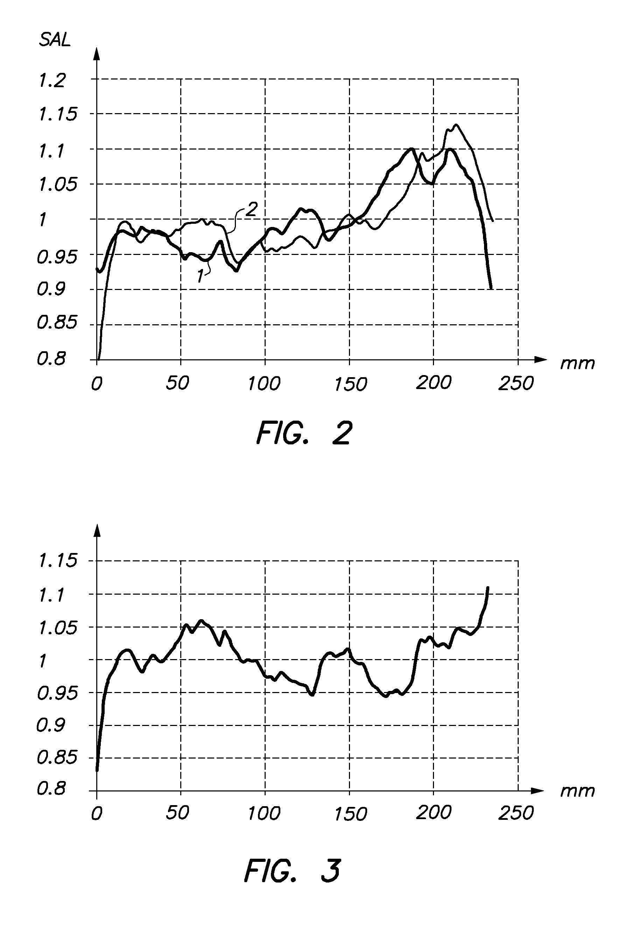

Figure 2 shows the profile of both images in the fast scan direction (Scan Average Level (SAL), being the signal detected by photo-multiplier and (amplifying) electronics for a pixel versus distance along a scan line in mm).

Profile 1 relates to the screen which was aligned with the right side of the cassette, profile 2 relates to the screen, which was aligned to the left side of the cassette.

This figure learns that curve 2 of figure 2 is about 5% higher than curve 1 for abscissae values between 50 and 80 mm, while curve 1 is higher than curve 2 for abscissae values between 150 and 180 mm.

The curve shown in figure 3 represents the comparison (ratio) of both profiles.

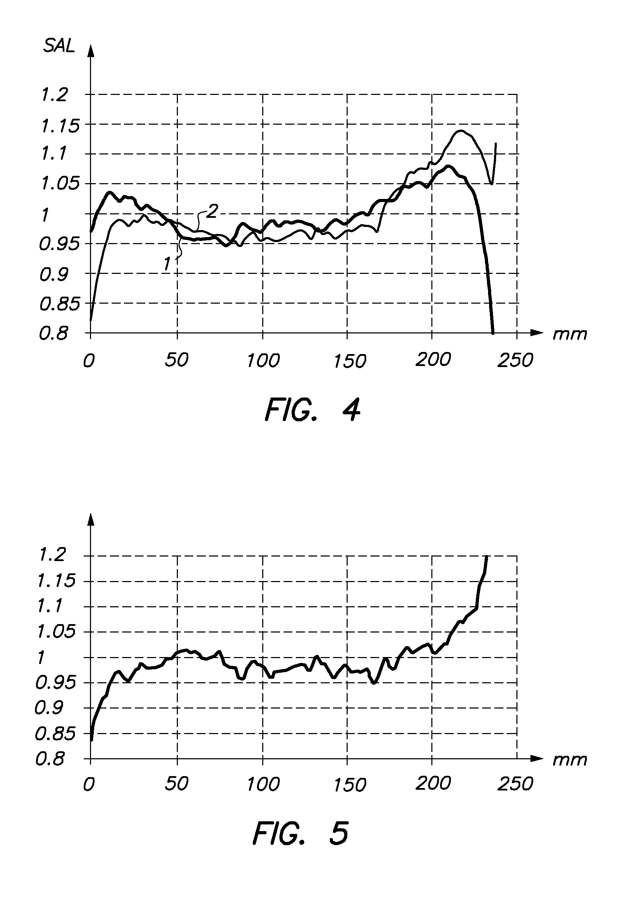

Figure 4 shows the result of the same situations as those for which the profiles were shown in figure 2. However, a hollow tube having a length of about 15 cm and an inner diameter of about 8 cm and having its inner surface covered with high-gloss aluminum was positioned between the output of the light guide and the entrance window of the photo-multiplier. In this way the light leaving a single fiber is spread over the entire entrance surface of the anode of the photo-multiplier and also over the entire surface of the optical filter.

Figure 5 shows the comparison (ratio of) between both curves shown in figure 4. The fluctuations in the curve have disappeared, this corresponds with reduced banding in the image.

## Claims

1. An apparatus for reading an image that has been stored in a recording member comprising
- a flying spot scanner scanning the recording member with radiation,
- a detector for converting light entering its entrance surface into an electric signal,
- light guiding means for guiding image-wise modulated light generated when scanning of the recording member towards the entrance surface of the detector **characterised in that**
- light distributing means are provided in between said light guiding means and said detector for distributing light leaving the light guiding means over substantially the whole entrance surface of said detector.

2. An apparatus according to claim 1 wherein said light distributing means is a diffuser.

3. An apparatus according to claim 1 wherein said light guiding means is a tube placed between the output of the light guiding means and the entrance window of the detector.

4. An apparatus according to claim 3 wherein the inner surface of said tube reflects light.

5. An apparatus according to claim 4 wherein the inner surface of said tube is covered with a light reflecting lacquer.

6. An apparatus according to claim 1 wherein said light guiding means is an integrating sphere.

7. An apparatus according to claim 6 wherein the inner surface of said light integrating sphere reflects light.

8. An apparatus according to claim 7 wherein the inner surface of said light integrating sphere is covered with a light reflecting lacquer.

9. An apparatus according to claim 1 wherein said recording member is a photostimulable phosphor screen and wherein the wavelength of said radiation is situated in the stimulating range of the photostimulable phosphor screen.

10. An apparatus according to claim 1 wherein said light guide is a bundle of optical fibers.

11. An apparatus according to claim 1 wherein said detector is a photo-multiplier.

12. A method of reading an image that has been stored in a recording member wherein said recording member is pixel-wise scanned by means of radiation and wherein image-wise modulated light emitted by the recording member upon scanning is guided by light-guiding means to a light sensitive entrance surface of a detector **characterised in that** the light leaving the light-guiding means is distributed over substantially the entire light sensitive entrance surface of said detector.

13. A method according to claim 12 wherein said image is a radiation image stored in a photo-stimulable phosphor screen and wherein said screen is scanned with stimulating light and wherein light emitted by the screen upon stimulation is guided onto the light sensitive surface of a photo-multiplier.
